# EUROPÄISCHE PATENTSCHRIFT

(11) **EP 2 643 190 B1**
(45) Veröffentlichungstag und Bekanntmachung des Hinweises auf die Patenterteilung: **07.10.2015**
(21) Anmeldenummer: 11794068.4
(22) Anmeldetag: 24.11.2011
(51) Int. Cl.: F16M 13/00, B60R 11/00, F16M 11/04, B60R 11/02

(54) **HALTERUNG FÜR KRAFTFAHRZEUGE ZUR AUFNAHME VON MOBILEN GERÄTEN**
HOLDER FOR MOTOR VEHICLES FOR RECEIVING MOBILE DEVICES
FIXATION POUR VÉHICULES AUTOMOBILES POUR LE LOGEMENT D'APPAREILS MOBILES

(30) Priorität: 25.11.2010 DE 202010015867 U
(43) Veröffentlichungstag der Anmeldung: 02.10.2013
(73) Patentinhaber: Buchhalter, Thomas, 53859 Niederkassel (DE)
(72) Erfinder: Buchhalter, Thomas, 53859 Niederkassel (DE)
(74) Vertreter: Von Kreisler Selting Werner - Partnerschaft von Patentanwälten und Rechtsanwälten mbB
(86) Internationale Anmeldenummer: PCT/EP2011/070916
(87) Internationale Veröffentlichungsnummer: WO 2012/069579

(56) Entgegenhaltungen:
- EP-A1- 2 030 844
- WO-A1-99/01971
- WO-A1-2007/069903
- DE-A1-102006 021 459
- DE-U1- 29 618 476
- US-A- 6 035 036

## Beschreibung

Die Erfindung betrifft eine Halterung zur Aufnahme von mobilen Geräten, insbesondere Navigations- oder Kommunikationsgeräten in Kraftfahrzeugen nach dem Oberbegriff des Anspruchs 1.

Eine derartige Halterung, nämlich eine Klemmvorrichtung für mobile Geräte ist beispielsweise aus der DE 296 18 476 bekannt. Die bekannte Halterung weist zwei in dem Gehäuse gelagerte Klemmbacken, die manuell zusammehdrückbar sind, um ein mobiles Gerät in einer bestimmten Rastposition der Klemmbacken zu halten. Die verstellbaren Klemmbacken ermöglichen es dabei, sich an unterschiedliche Geräte anzupassen, so dass derartige Halterungen universell für verschiedene mobile Geräte angeboten werden können.

US 6 035 036 zeigt Orbebegriff des Anspruchs 1 und offenbart eine Halterung für Kraftfahrzeuge zur Aufnahme eines Mobiltelefons mit Klemmbacken zum Klemmen des Mobiltelefons, wobei eine Energieversorgung für den Klemmvorgang vorgesehen ist.

Die *mobilen Geräte* können beispielsweise Navigations- oder Kommunikationsgeräte, z.B. Mobiltelefone oder Smartphones sein.

Bislang werden alle im Markt befindlichen Halter rein mechanisch betrieben.

Die mobilen Geräte werden im Halter mechanisch verklemmt oder verrastet. Wieder andere werden gegen eine Feder vorgespannt und dann wieder entriegelt.

In nicht wenigen Fällen ist eine Bedienung mit beiden Händen erforderlich.

Dies ist unpraktisch und teilweise schwer und nur mit beiden Händen bedienbar.

Der Erfindung liegt daher die Aufgabe zugrunde, eine Halterung der eingangs genannten Art zu schaffen, die einen maximalen Bedienkomfort aufweist und für einen Benutzer keine Aufwendung jeglicher mechanischer Kräfte erfordert.

Zur Lösung dieser Aufgabe dienen die Merkmale des Anspruchs 1.

Die Erfindung sieht in vorteilhafter Welse vor, dass das Gehäuse mit einer eigenen Energieversorgung für den Klemmvorgang ausgerüstet ist, wobei die Klemmbacken elektromechanisch zum Öffnen oder Schließen verfahrbar sind, wobei die Elektronikeinheit für ein bestimmtes Gerät eine Klemmposition speichern kann, wobei sich die Öffnungsposition der Klemmbacken durch ein Auseinanderfahren der Klemmbacken um einen geringen vorbestimmten Weg ergibt.

Die Erfindung löst die eingangs beschriebenen Nachteite, indem die Klemmung für das mobile Gerät elektromechanisch automatisch ausführbar ist.

Hierzu ist vorzugsweise vorgesehen, dass ein Elektromotor zum Verfahren mindestens einer der Klemmbacken vorgesehen ist.

Die Energieversorgung kann per Anschlusskabel von der Bordversorgung des Fahrzeugs oder eine integrierte Batterie/Akkueinheit oder zusätzlich mit Solarzellen ausgestattet sein, d.h., dass eine integrierte Batterie/Akkueinheit auch mit Solarzellen unterstützt werden kann.

An dem Gehäuse sind vorzugsweise zum Öffnen oder Schließen der Klemmbacken Sensoren vorgesehen, wobei ein am Gehäuse angeordneter Sensor das Einsetzen des mobilen Gerätes detektiert, so dass die Klemmbacken schließen können und ein Öffnungssensor am Gehäuse durch Betätigen des Benutzers die Klemmbacken bei Bedarf öffnet.

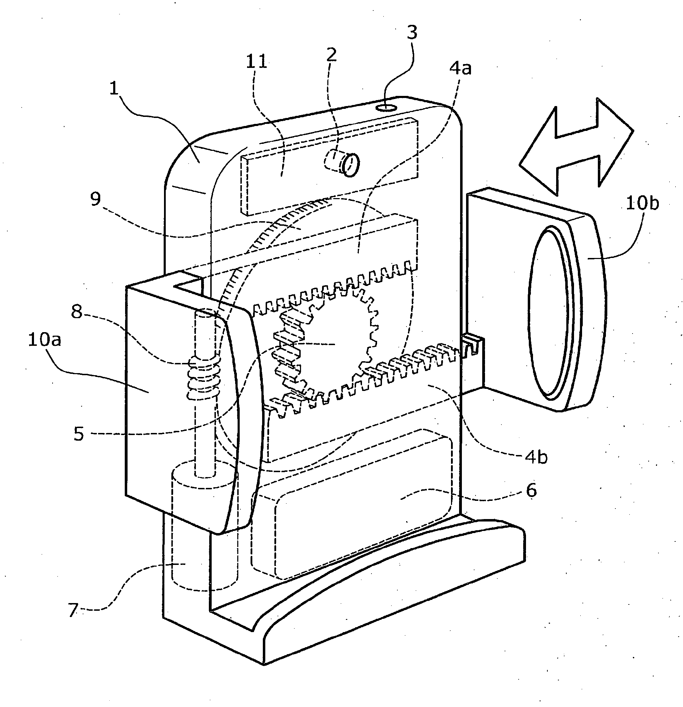

Im Folgenden wird unter Bezugnahme auf die einzige Figur ein Ausführungsbeispiel der Erfindung näher erläutert.

In der einzigen Figur ist ein Gehäuse 1 der Halterung dargestellt, in dem zwei Klemmbacken 10a,10b in Pfeilrichtung beweglich gelagert sind. Am unteren Ende des Gehäuses 1 ist eine Auflagefläche für ein mobiles Gerät vorgesehen, auf das das mobile Gerät nach unten abgestützt werden kann. Ist das mobile Gerät auf diese Fläche aufgesetzt und an eine rückwärtige Stützfläche des Gehäuses 1 angelehnt, detektiert ein in dem Gehäuse 1 angeordneter Sensor 2, z.B. durch eine Öffnung des Gehäuses 1 hindurch, die Anwesenheit des mobilen Gerätes, woraufhin eine in dem Gehäuse 1 angeordnete Elektronikeinheit 11 einen Antriebsmotor 7 zum Antrieb der Klemmbacken 10a,10b ansteuert. Der Motor 7 ist vorzugsweise über eine Getriebeeinheit mit den Klemmbacken 10a,10b gekoppelt, wobei die Getriebeeinheit im gezeigten Ausführungsbeispiel eine vom Motor 7 angetriebene Antriebsschnecke 8 aufweist, die sich mit einem großen Antriebsritzel 9 über die Verzahnung kämmt. Das große Ritzel 9 ist koaxial und drehfest mit einem kleinen Ritzel 5 gekoppelt. Das kleine Ritzel 5 kämmt zwei in Pfeilrichtung bewegbare gezahnte, vorzugsweise linear geführte Antriebsstangen 4a,4b, die jeweils mit den Klemmbacken 10a und 10b fest verbunden sind. Dreht sich das kleine Ritzel 5 in der Zeichnung gesehen im Uhrzeigersinn, führen die Klemmbacken 10a,10b eine Schließbewegung aus, während bei einer Drehbewegung gegen die Uhrzeigerrichtung die Klemmbacken 10a,10b geöffnet werden. Zum Öffnen wird der Motor 7 in Gegenrichtung gedreht. Die Steuerung erhält den Befehl hierfür über den am Gehäuse angebrachten Öffnungssensor 3. Die Sensoren 2,3 können als optische, kapazitive oder mechanische Sensoren, z.B. in Form eines Tasters oder als berührungssensitiver Sensor ausgebildet sein. Bevorzugt sind stromsparende Sensoren.

Es versteht sich, dass auch andere Antriebs- und Getriebeeinheiten zur Bewegung der Klemmbacken verwendet werden können.

Die Elektronikeinheit 11 kann für ein bestimmtes mobiles Gerät eine Klemmposition speichern, wobei sich die Öffnungsposition der Klemmbacken 10a,10b dann durch ein Auseinanderfahren der Klemmbacken 10a,10b um einen geringen vorbestimmten Betrag ergibt. Auf diese Weise werden kurze Öffnungs- und Schließwege erzielt, so dass der Energieverbrauch bei der Bedienung der Halterung gering ist.

In dem Gehäuse kann eine Batterie- oder Akkumulatoreinheit integriert sein, wobei der Akkumulator in vorteilhafter Weise auch mit einer Solarzelle bei Lichteinfall aufgeladen werden kann.

Das Speichern der Klemmposition kann in einfacher Weise durch die Elektronikeinheit 11 selbst erfolgen, indem der Klemmzustand, z.B. den Anstieg der Stromaufnahme des Motors 7 detektiert wird.

Soll ein anderes, z.B. ein breiteres mobiles Gerät, in der Halterung gehalten werden, genügt beispielsweise eine zweimalige oder längere Betätigung des Öffnungssensors 3, um die Klemmbacken 10a,10b in die vollständig offene Position zu fahren. Auch hier kann die maximale Öffnungsposition von der Elektronikeinheit 11 erkannt werden, wenn die mit den Klemmbacken 10a,10b verbundenen Antriebsstangen 4a,4b an einen Anschlag stoßen. Die Klemmposition für das neue mobilen Gerät kann dann wie zuvor beschrieben neu gespeichert werden.

Insbesondere soll die Notwendigkeit einer unkomfortablen Zweihand-Bedienung vermieden werden.

Die Halterung ist als passiver Haltekopf ausgebildet, der auf verschiedene Trägersysteme verschiedenster Hersteller aufgesetzt werden kann, die zum Befestigen im Fahrzeuginnenraum, vorzugsweise am Armaturenbrett oder an der Windschutzscheibe, z.B. über eine Saugnapfbefestigung mit Schwenkarm, bekannt sind.

Die Halterung kann auch mit einer Ladefunktion für das mobile Gerät ausgerüstet sein.

Vorteilhafterweise wird die elektromechanisch betätigbare Halterung derart ausgebildet, dass sie schwenkbar ist und somit auch von einer vertikalen Ausrichtung des mobilen Gerätes in eine horizontale Ausrichtung verschwenkt werden kann. Weiterhin soll eine integrierte Lademöglichkeit für das mobile Gerät geschaffen werden.

Vorzugsweise wird die Energie für den Klemmvorgang über eine im Halter integrierte Batterie/Akkueinheit 6 bewerkstelligt, die auch von einer Solarzelle unterstützt werden kann, die den Energieverbrauch der Batterie bei Helligkeit reduziert, oder die die Akkueinheit bei Tag auflädt.

Die elektromechanische Halterung soll in einem Gehäuse, das vorzugsweise in Kunststoff ausgeführt ist, untergebracht werden.

Die Klemmung erfolgt über zwei Klemmbacken 10a,10b die elektromechanisch zum Öffnen bzw. Schließen verfahren werden.

Der Antrieb kann in vorteilhafter Weise elektrisch erfolgen.

Über den Motor 7 wird eine Getriebeeinheit bestehend aus den Elementen 4a,4b,5,8 und 9 angetrieben, die die Klemmbacken 10a,10b öffnen und schließen.

Die Steuerung der Einheit 11 wird derart ausgebildet, dass das mobile Gerät gegen einen am Gehäuse 1 angebrachten Sensor 2 gedrückt wird und damit den Klemmvorgang auslöst.

Die Klemmung wird dann in vorteilhafter Weise durch einen Öffnungssensor 3 vorzugsweise an der Oberseite des Gehäuses gelöst, der mit einem Finger berührt wird.

Die Einstellung auf verschiedene Breiten von mobilen Endgeräten erfolgt automatisch, indem eine Position beim erstmaligen Verfahren in einer Elektronikeinheit 11 gespeichert wird.

Das Abschalten und den richtigen Anpressdruck der Klemmung wird über die integrierte Elektronikeinheit 11 erkannt und gespeichert.

Beim Betätigen des Öffnungssensors 3 wird die Klemmung geringfügig gelöst, so dass das mobile Gerät leicht entnommen werden kann.

Durch das geringfügige Öffnen wird auch beim Wiedergebrauch durch Wiedereinsetzen des mobilen Endgerätes auch nur ein kleiner Schließweg zu fahren sein, das wiederum günstig für den Energieverbrauch ist.

## Patentansprüche

1. Halterung für Kraftfahrzeuge zur Aufnahme eines mobilen Gerätes, mit einem Gehäuse (1) und mit Klemmbacken (10a,10b) zum Klemmen des mobilen Gerätes, wobei das Gehäuse 1 mit einer eigenen Energieversorgung (6) für den Klemmvorgang ausgerüstet ist, wobei die Klemmbacken (10a,10b) elektromechanisch zum Öffnen oder Schließen verfahrbar sind,
**dadurch gekennzeichnet, dass**
eine Elektronikeinheit (11) für ein bestimmtes mobiles Gerät eine Klernmposition speichert, wobei sich die Öffnungsposition der Klemmbacken (10a,10b) durch ein Auseinanderfahren der Klemmbacken (10a,10b) um einen geringen vorbestimmten Betrag ergibt.

2. Halterung nach Anspruch 1, **dadurch gekennzeichnet, dass** ein Elektromotor (7) zum Verfahren mindestens einer der Klemmbacken (10a,10b) vorgesehen ist.

3. Halterung , nach Anspruch 1, oder 2, **dadurch gekennzeichnet, dass** die Energieversorgung (6) mit Solarzellen ausgestattet ist.

4. Halterung nach einem der Ansprüche 1 bis 3, **dadurch gekennzeichnet, dass** das Gehäuse (1) zum Öffnen oder Schließen der Klemmbacken (10a,10b) mit Sensoren (2,3) ausgestattet ist.

5. Halterung nach Anspruch 4, **dadurch gekennzeichnet, dass** eine elektronische Einheit (11) integriert ist, die die Schließ- und Öffnungsfunktion in Abhängigkeit von Sensorsignalen der Sensoren (2,3) steuert.

6. Halterung nach Anspruch 5, **dadurch gekennzeichnet, dass** die elektronische Einheit (11) Öffnungs- und Schließpositionen der Klemmbacken (10a,10b) speichert.

## Claims

1. Holder for use in motor vehicles for receiving a mobile device, comprsing a housing (1) and clamping jaws (10a,10b) for clamping the mobile device, wherein the housing (1) is equipped with a dedicated power supply (6) for the clamping operation, wherein the clamping jaws (10a,10b) are movable electromechanically for opening or closing purposes,
**characterized in that**
an electronic unit (11) for a specific mobile device stores a clamping position, wherein the opening position of the clamping jaws (10a,10b) is effected by the clamping jaws (10a,10b) moving away from each other by a small predetermined amount.

2. Holder of claim 1, **characterized in that** an electric motor (7) is provided for moving at least one of the clamping jaws (10a,10b).

3. Holder of claim 1 or 2, **characterized in that** the power supply (6) is provided with solar cells.

4. Holder of any one of claims 1 to 3, **characterized in that** the housing (1) is equipped with sensors (2,3) for opening or closing the clamping jaws (10a, 10b).

5. Holder of claim 4, **characterized in that** an electronic unit (11) is integrated that controls the closing and opening function in dependence on sensor signals from the sensors (2,3).

6. Holder of claim 5, **characterized in that** the electronic unit (11) stores opening and closing positions of the clamping jaws (10a,10b).

## Revendications

1. Support pour véhicules automobiles destiné au logement d'un appareil mobile, comprenant un boîtier (1) et comprenant des mâchoires de serrage (10a, 10b) destinées au serrage de l'appareil mobile, le boîtier (1) étant pourvu d'une propre alimentation en énergie (6) pour le processus de serrage, les mâchoires de serrage (10a, 10b) pouvant être déplacées de manière électromécanique en vue de leur ouverture ou de leur fermeture, **caractérisé en ce que**
une unité électronique (11) mémorise une position de serrage pour un appareil mobile déterminé, la position d'ouverture des mâchoires de serrage (10a, 10b) étant réalisée par l'intermédiaire d'un écartement des mâchoires de serrage (10a, 10b) d'une faible valeur prédéterminée.

2. Support selon la revendication 1, **caractérisé en ce qu'**un moteur électrique (7) est prévu afin de déplacer au moins l'une des mâchoires de serrage (10a, 10b).

3. Support selon la revendication 1 ou 2, **caractérisé en ce que** l'alimentation en énergie (6) est équipée de cellules solaires.

4. Support selon l'une des revendications 1 à 3, **caractérisé en ce que** le boîtier (1) est équipé de capteurs (2, 3) destinés à l'ouverture ou la fermeture des mâchoires de serrage (10a, 10b).

5. Support selon la revendication 4, **caractérisé en ce qu'**une unité électronique (11) est intégrée, laquelle commande la fonction de fermeture et d'ouverture en fonction des signaux émis par les capteurs (2, 3).

6. Support selon la revendication 5, **caractérisé en ce que** l'unité électronique (11) mémorise les positions d'ouverture et de fermeture des mâchoires de serrage (10a, 10b).
